# EUROPÄISCHE PATENTANMELDUNG

(11) **EP 0 955 647 A2**
(43) Veröffentlichungstag der Anmeldung: **10.11.1999**
(21) Anmeldenummer: 99105720.9
(22) Anmeldetag: 20.03.1999
(51) Int. Cl.: H01G 4/228

(54) **Kondensator-Anschlussklemme**

(30) Priorität: 04.05.1998 DE 19819768
(71) Anmelder: Brökelmann, Jaeger & Busse GmbH & Co, D-59755 Arnsberg (DE)
(72) Erfinder: Henrici, Dieter, Dipl.-Ing., 59757 Arnsberg (DE); Wedding, Hans, 59759 Arnsberg (DE)
(74) Vertreter: Patentanwälte Ostriga & Sonnet

(57) **Zusammenfassung**

Die Erfindung betrifft eine Kondensator-Anschlußklemme mit einer im wesentlichen kreisförmigen Basisplatte, an deren einer Seite ein abstehender, zumindest teilweise umlaufender Kragen zum Eingriff in einen Kondensatorbecher angeordnet ist, sowie mit an der Basisplatte ausgebildeten Kammern zur Aufnahme elektrischer Kontakte.

Die Besonderheit der Erfindung besteht darin, daß mit dem Kragen radial federnd ausgebildete Werkstoffbereiche einstückig-stoffschlüssig verbunden sind, die über Betätigungsflächen zur Verlagerung der Werkstoffbereiche aus einer entspannten, radial äußeren Ruheposition in eine gespannte, radial innere Wirkposition verfügen, und daß an den Werkstoffbereichen Rückhalteflächen zum Hintergreifen von entsprechenden Halteflächen am Kondensatorbecher angeordnet sind.

## Beschreibung

Die Erfindung betrifft eine Kondensator-Anschlußklemme mit einer im wesentlichen kreisförmigen Basisplatte, an deren einer Seite ein abstehender, zumindest teilweise umlaufender Kragen zum Eingriff in einen Kondensatorbecher angeordnet ist, sowie mit an der Basisplatte ausgebildeten Kammern zur Aufnahme elektrischer Kontakte.

Derartige Kondensator-Anschlußklemmen dienen einerseits der einfachen elektrischen Kontaktierung von elektrischen Anschlußleitungen mit den Anschlußenden des Kondensators und umfassen zu diesem Zweck Kontakte mit Kontaktabschnitten zur schraubenlosen Kontaktierung. Andererseits dienen derartige Kondensator-Anschlußklemmen der geschützten Abdeckung eines Kondensatorbechers.

Bei einer bekanntgewordenen, jedoch druckschriftlich nicht belegbaren Kondensator-Anschlußklemme der Anmelderin, ist ein von der Basisplatte abstehender, umlaufender Kragen vorgesehen, der bei auf den Kondensatorbecher aufgesteckter Kondensator-Anschlußklemme mit am Außenumfang angeordneten Halterippen einen Preßsitz mit dem Kondensatorbecher eingeht.

Der Kondensatorbecher besteht in der Regel aus einem relativ preiswerten, flexiblen Kunststoff, wohingegen die Kondensator-Anschlußklemme aus einem härteren Kunststoff, wie Polykarbonat, besteht. Unter Umständen kann es vorkommen, daß aufgrund der herstellungsbedingt großen Toleranzen des Innenumfanges des Kondensatorbechers im Falle eines zu engen Kondensatorbechers beim bzw. nach dem Einstecken der Kondensator-Anschlußklemme in den Kondensatorbecher im freien Randbereich des Kondensatorbechers Risse auftreten. Darüber hinaus erfordert das Einsetzen einer Kondensator-Anschlußklemme in einen zu engen Kondensatorbecher relativ große Einpreßkräfte. Im Falle eines zu großen Kondensatorbechers sitzt die Kondensator-Anschlußklemme hingegen locker in dem Kondensatorbecher und ist relativ zu diesem drehbar.

Es ist Aufgabe der Erfindung, eine Kondensator-Anschlußklemme gemäß dem Oberbegriff des Anspruchs 1 zu schaffen, die einerseits sicher ein Reißen der Kondensatorbecherwand verhindert und andererseits einen sicheren Preßsitz auch bei größeren Toleranzen des Innenumfanges des Kondensatorbechers ermöglicht.

Die Erfindung löst diese Aufgabe mit den Merkmalen des Anspruchs 1, insbesondere mit denen des Kennzeichenteils, wonach mit dem Kragen radial federnd ausgebildete Werkstoffbereiche einstückig-stoffschlüssig verbunden sind, die über Betätigungsflächen zur Verlagerung der Werkstoffbereiche aus einer entspannten, radial äußeren Ruheposition in eine gespannte, radial innere Wirkposition verfügen, und wonach an den Werkstoffbereichen Rückhalteflächen zum Hintergreifen von entsprechenden Halteflächen am Kondensatorbecher angeordnet sind.

Das erfinderische Prinzip besteht zunächst darin, radial federnde Werkstoffbereiche an der Kondensator-Anschlußklemme selbst anzuordnen. Beim Stand der Technik ist lediglich der Kondensatorbecher allein aufgrund seiner Materialeigenschaften radial elastisch ausgebildet. Die Erfindung erkennt, daß größere Toleranzen des Innenumfanges des Kondensatorbechers abzufangen sind, indem man zusätzliche Elastizität in der Kondensator-Anschlußklemme selbst bereitstellt. Gleichzeitig sind nunmehr nur geringe Einpreßkräfte erforderlich.

Durch eine radial federnde Ausbildung der Werkstoffbereiche ist bei Erreichen einer gespannten Wirkposition eine Rückstellkraft vorhanden, die bestrebt ist, die Werkstoffbereiche in ihre entspannte Ruheposition zurückzuverstellen. Dabei werden im zusammengesteckten Zustand von Kondensator-Anschlußklemme und Kondensatorbecher die Betätigungsflächen der Werkstoffbereiche gegen Innenwandabschnitte des Kondensatorbechers gedrückt, so daß Rückhalteflächen der Werkstoffbereiche und Halteflächen des Kondensatorbechers zum Anliegen kommen und die Kondensator-Anschlußklemme gegen ein Lösen vom Kondensatorbecher sichern.

Gemäß einer vorteilhaften Ausgestaltung der Erfindung sind die Werkstoffbereiche integraler Bestandteil eines umlaufenden zweiten, äußeren Kragens, dessen Außenumfangsfläche Segmente aufweist, die bezüglich eines durch die Werkstoffbereiche definierten äußeren Kegelumfanges zurückstehen. Auf diese Weise wird eine sehr gleichmäßige Kraftverteilung, sowohl der beim Aufsetzen der Kondensator-Anschlußklemme auf den Kondensatorbecher auftretenden Einschubkräfte, wie auch der für den Preßsitz verantwortlichen Andrückkräfte, die durch die Rückstellkraft der Werkstoffbereiche aufgebracht werden, erreicht.

Gemäß einer weiteren vorteilhaften Ausführungsform ist die Betätigungsfläche konisch ausgebildet und verjüngt den äußeren Kragen in Einsteckrichtung. Auf diese Weise bilden die Betätigungsflächen Einführschrägen, die ein Aufsetzen der Kondensator-Anschlußklemme auf den Kondensatorbecher mit geringem Kraftaufwand ermöglichen und zugleich automatisch die Werkstoffbereiche aus der entspannten Ruheposition in die gespannte Wirkposition verstellen.

Weitere Vorteile der Erfindung ergeben sich aus den nichtzitierten Unteransprüchen sowie aus der nachfolgenden Beschreibung eines Ausführungsbeispiels, das in den Zeichnungen dargestellt ist. In den Figuren zeigen:
Fig. 1 eine Schrägansicht einer erfindungsgemäßen Kondensator-Anschlußklemme,
Fig. 2 einen Längsschnitt durch die Kondensator-Anschlußklemme gemäß Fig. 1,
Fig. 3 einen vergrößerten Ausschnitt eines Randbereiches der Kondensator-Anschlußklemme gemäß Fig. 2,
Fig. 4 eine Schnittansicht eines Kondensatorbechers,
Fig. 5 einen Längsschnitt durch den Kondensatorbecher gemäß Ansichtspfeil V in Fig. 4,
Fig. 6 einen Ausschnitt aus dem Randbereich des Kondensatorbechers gemäß Fig. 5,
Fig. 7 einen Schnitt durch einen Kondensatorbecher mit darauf aufgesetzter Kondensator-Anschlußklemme,
Fgi. 8 einen Ausschnitt aus einem Randbereich von Kondensator-Anschlußklemme und Kondensatorbecher gemäß Fig. 7,
Fig. 9 einen Schnitt durch den Kondensatorbecher und die darauf aufgesetzte Kondensator-Anschlußklemme gemäß Fig. 7, wobei Kondensatorbecher und Kondensator-Anschlußklemme bezüglich Fig. 7 geringfügig um die gemeinsame Längsachse gedreht sind, und
Fig. 10 einen Ausschnitt aus einem Randbereich von Kondensator-Anschlußklemme und Kondensatorbecher aus Fig. 9 gemäß Fig. 8.

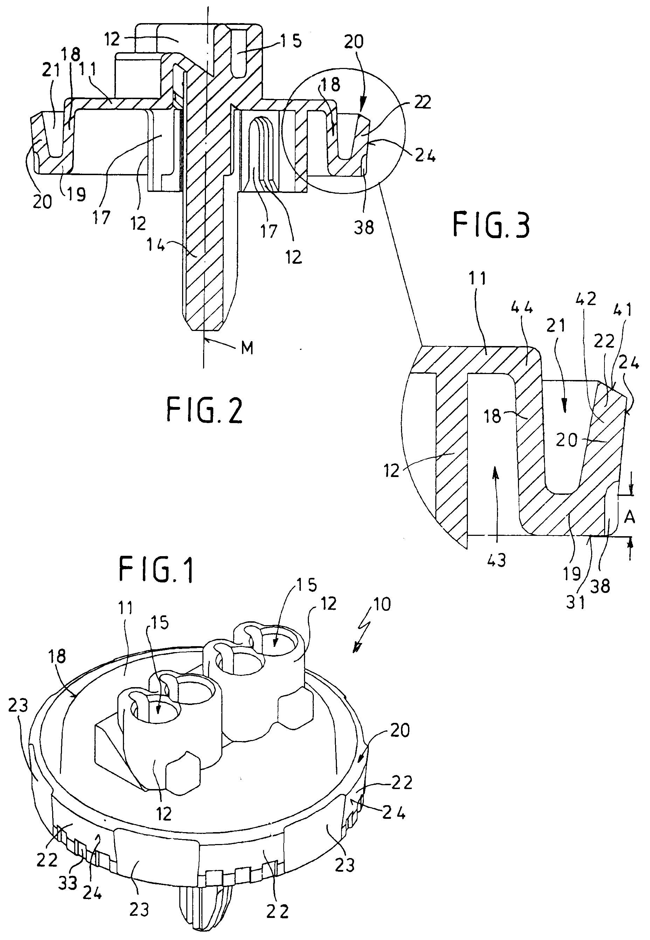

Die in ihrer Gesamtheit mit 10 bezeichnete Kondensator-Anschlußklemme umfaßt eine Basisplatte 11 mit kreisförmigem Querschnitt. Beidseitig der Basisplatte 11 erstrecken sich Aufbauten 12, die Kammern 17 zur Aufnahme von nicht gezeigten Kontakten umfassen. Von den Aufbauten 12 und der Basisplatte 11 erstreckt sich bezüglich Fig. 2 nach unten ein Steckansatz 14 weg, der gegebenenfalls einer zusätzlichen Halterung des nicht gezeigten Kondensators dient.

In der Basisplatte 11 sind Öffnungen 16 (Fig 9) angeordnet, die mit den Kammern 17 und den ihnen zugeordneten Öffnungen 15 auf der Oberseite der Aufbauten 12 unter Bildung von gemeinsamen, jeweils durchgehenden Kanälen verbunden sind. Auf diese Weise kann durch die Kondensator-Anschlußklemme 10 hindurch eine elektrische Kontaktierung stattfinden. Beim Ausführungsbeispiel ist es vorgesehen, in den Kammern 17 der Aufbauten 12 unterhalb der Basisplatte 11, gemäß Fig. 2, nicht gezeigte Kontakte mit Kontaktabschnitten zur schraubenlosen direkten mechanischen und elektrischen Kontaktierung der Anschlußleitungen einerseits sowie der am Kondensator selbst vorgesehenen Anschlüsse andererseits unterzubringen. Selbstverständlich ist auch eine andere geometrische Anordnung der Aufbauten 12 sowie der Kammern 17 möglich.

Von der Basisplatte 11 erstreckt sich ein vollständig umlaufender Kragen 18 (bezüglich Fig. 2) nach unten. Am unteren Rand des Kragens 18 ist ein Gelenkabschnitt 19 nach Art eines umlaufend ununterbrochenen Filmscharniers angeordnet, der einen zweiten äußeren umlaufenden Kragen 20 mit dem inneren Kragen 18 verbindet. Zwischen dem inneren Kragen 18 und dem äußeren Kragen 20 wird auf diese Weise ein etwa keilförmiger Ringraum 21 begrenzt. Beim Ausführungsbeispiel ist der Ringraum 21 vollständig umlaufend. Es kann aber durchaus auch ein nur teilweise umlaufender Ringraum 21 vorgesehen sein.

Wie insbesondere aus Fig. 1 deutlich wird, umfaßt der äußere Kragen 20 einander in Umfangsrichtung abwechselnde Werkstoffbereiche 22 und dem gegenüber rückspringende Segmente 23 geringerer Werkstoffstärke. Auf der Außenumfangsfläche der Werkstoffbereiche 22 ist jeweils eine Betätigungsfläche 24 angeordnet, deren Funktion in Zusammenwirkung mit dem Kondensatorbecher später erläutert wird.

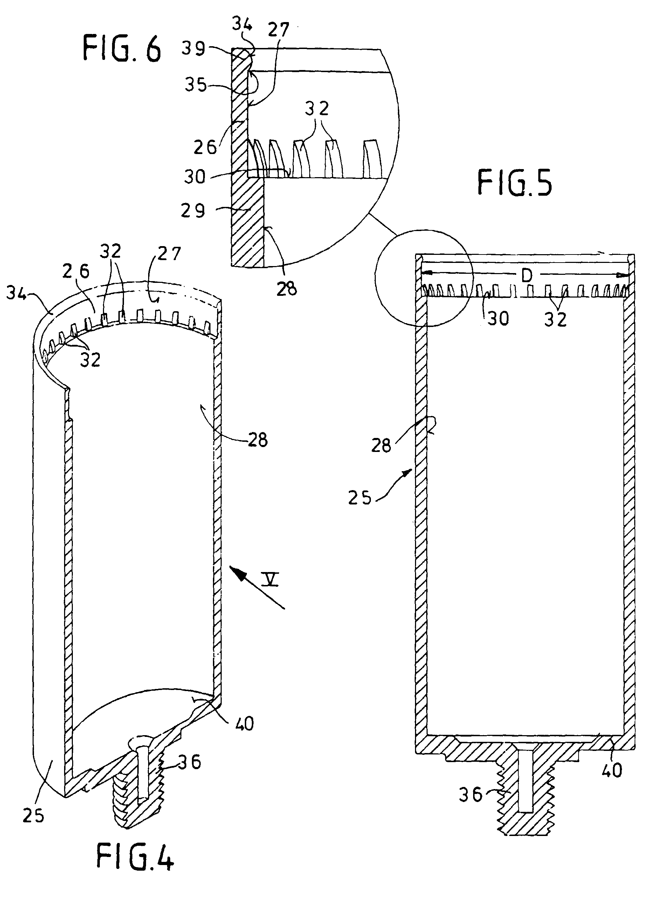

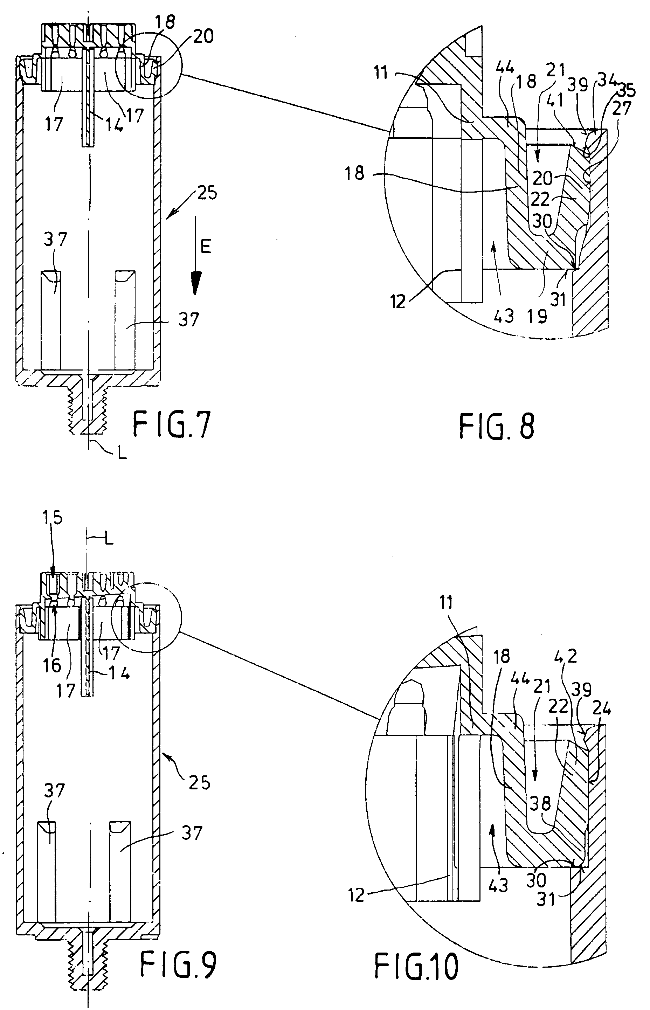

Fig. 4 zeigt einen Kondensatorbecher 25 zur Verwendung mit der erfindungsgemäßen Kondensator-Anschlußklemme 10. Der im wesentlichen kreiszylindrische Kondensatorbecher 25 umfaßt einen Randabschnitt 26, dessen Innenumfangsfläche 27 einen größeren Durchmesser D (Fig. 5) aufweist als die Innenumfangsfläche 28 des übrigen Kondensatorbechers 25. Der Randabschnitt 26 ist von dem übrigen Bereich 29 des Kondensatorbechers 25 durch eine Absatzstufe 30 getrennt, an der im zusammengesteckten Zustand von Kondensator-Anschlußklemme 10 und Kondensatorbecher 25 die Unterseite 31 des Gelenkabschnitts 19 teilweise anliegt (Fig. 8). Im Bereich der Absatzstufe 30 sind an der Innenumfangsfläche 27 des Randabschnitts 26 nach innen hin vorstehende Zähne 32 angeordnet, die in korrespondierende, rückspringende Ausnehmungen 33 der Werkstoffbereiche 22 eingreifen, um eine Verdrehsicherung zu gewährleisten.

Der freie Rand des Kondensatorbechers 25 weist einen umlaufenden, nach innen geringfügig vorstehenden Wulst 34 auf, an dem Halteflächen 35 (Fig. 6) angeordnet sind, deren Funktion später beschrieben wird.

Zur Befestigung des Kondensatorbechers 25 an einem nicht gezeigten Leuchtenblech sind Befestigungselemente, beispielsweise ein in den Fig. gezeigter Gewindezapfen 36, am Kondensatorbecher 25 angeordnet. Alternativ oder zusätzlich können am Kondensatorbecher 25 auch Nuten 37 (Fig. 7 und 9) zum Einschieben in einen nicht dargestellten Montagehalter angeordnet sein.

Ein nicht gezeigter Kondensator wird bezüglich Fig. 5 von oben etwa entlang der Längsachse L in Einsteckrichtung E in den leeren Kondensatorbecher 25 eingebracht. Anschließend wird die Kondensator-Anschlußklemme 10 mit ihren beiden Kragen 18, 20 in den Kondensatorbecher 25 eingesetzt. Der Fußabschnitt 38 (Fig. 3) des äußeren Kragens 20, über den der Werkstoffbereich 22 an den Gelenkabschnitt 19 angebunden ist, weist einen geringfügig kleineren Außendurchmesser auf als der Innendurchmesser des umlaufenden Wulstes 34 des Kondensatorbechers 25. Ein Einsetzen der Kondensator-Anschlußklemme 10 in den Kondensatorbecher 25 entlang einer Wegstrecke entsprechend der axialen Länge A des Fußabschnittes 38 ist damit weitgehend kraftlos möglich. An den Fußabschnitt 38 schließt sich die Betätigungsfläche 24 des Werkstoffbereiches 22 an, die bei einer weitergehenden Einsteckbewegung entlang der Innenumfangsfläche 39 des Wulstes 34 gleitet. Die Innenumfangsfläche 39 kann gemäß Fig. 8 und 10 beispielsweise als Einführschräge ausgebildet sein.

Bei einer weitergehenden Bewegung der Kondensator-Anschlußklemme 10 in Einsteckrichtung E zum Kondensatorbecherboden 40 hin wird der Werkstoffbereich 22 radial nach innen zur Mittelachse M der Kondensator-Anschlußklemme 10 hin ausweichen, wobei durch den Ringraum 21 genügend Ausweichraum zur Verfügung steht.

Durch die kronenartige Ausbildung des äußeren Kragens 20 mit in Umfangsrichtung einander abwechselnden Segmenten 22 und dünneren Werkstoffbereichen 23 findet beim Einstecken zusätzlich der Effekt statt, daß die Segmente 23 mit ihren dünneren Wandstärken eine geringfügige Bewegung radial nach außen durchlaufen. Auf diese Weise wird der äußere Kragen 20 derart verformt, daß seine Umfangslinie leicht wellenförmig ist. Die radiale Ausweichbewegung der Segmente 23 nach außen erleichtert dabei die radiale Einwärtsbewegung der Werkstoffbereiche 22.

Bei Erreichen einer Endposition gemäß den Fig. 7 bis 10 wird der Werkstoffbereich 22 mit seiner Betätigungsfläche 24 aufgrund der durch die Elastizität des Gelenkabschnittes 19 verursachten radial nach außen gerichteten Rückstellkraft zur Anlage an die Innenumfangsfläche 27 des Randabschnittes 26 gepreßt. Ein Zusammenwirken der Rückhaltefläche 41 am Kopfbereich 42 des Werkstoffbereiches 22 mit der am Wulst 34 angeordneten Haltefläche 35 verhindert sicher ein Lösen der Kondensator-Anschlußklemme 10 vom Kondensatorbecher 25. Mit Erreichen der Endposition greifen die Zähne 32 und die Ausnehmungen 33 zur Verdrehsicherung ineinander.

Durch die besondere Ausbildung des äußeren Kragens 20 wird außerdem ein besonders gleichmäßiger Preßsitz der Kondensator-Anschlußklemme 10 auf dem Kondensatorbecher 25 erreicht. Dabei ist von Vorteil, daß durch Verlagerung der Werkstoffbereiche 22 radial nach innen während der Einsetzbewegung die Segmente 23 radial nach außen verlagert wurden. Auch die Segmente 23 können so mit ihrer Außenmantelfläche zum Preßsitz beitragen. Gleichzeitig sind die Einsetzkräfte sehr gering, da eine verhältnismäßig lange Einführschräge von der Betätigungsfläche 24 zur Verfügung gestellt wird und der Werkstoffbereich 22 radial nach innen unter Verringerung des Gesamtdurchmessers der Kondensator-Anschlußklemme 10 ausweichen kann.

Die erfindungsgemäße Anordnung zweier Kragen 18, 20 nach Art einer Doppelkragenanordnung schafft in besonders geschickter Weise radiale Elastizität der Kondensator-Anschlußklemme 10, weil neben dem Ringraum 21 zwischen dem inneren Kragen 18 und dem äußeren Kragen 20 zusätzlicher Raum 43 radial innerhalb des Kragens 18 zur Verfügung steht. Bei Verstellung des Werkstoffbereiches 22 aus einer entspannten Ruheposition gemäß Fig. 3 in eine nicht dargestellte Wirkposition, in der der Wulst 34 an der Betätigungsfläche 24 angreift, weicht einerseits der Werkstoffbereich 22 relativ zu dem inneren Kragen 18 in den dazwischen angeordneten Ringraum 21 aus. Andererseits weicht aber auch die gesamte aus den beiden Kragen 18 und 20 sowie dem zugehörigen Gelenkabschnitt 19 bestehende Doppelkragenanordnung in den radial innerhalb des inneren Kragens 18 angeordneten zusätzlichen Raum 43 aus. Dabei wirkt der Anbindungsbereich 44, über den der Kragen 18 an die Basisplatte 11 angebunden ist, in analoger Weise als Filmscharnier.

Prinzipiell ist auch ein Lösen der Kondensator-Anschlußklemme 10 vom Kondensatorbecher 25 möglich. Die Rückhaltefläche 41 des freien Endes des äußeren Kragens 20 wirkt in diesem Falle als Betätigungsfläche, die den äußeren Kragen 20 radial nach innen verformt und auf diese Weise ein Herausziehen der Kondensator-Anschlußklemme 10 aus dem Kondensatorbecher 25 ermöglicht. Die Kraft, die man zum Lösen der Steckverbindung aufwenden muß, ist jedoch ungleich größer als die Einsteckkraft zum Kuppeln von Kondensator-Anschlußklemme 10 und Kondensatorbecher 25. Dies liegt im wesentlichen an den unterschiedlichen Winkeln, unter denen die Flächen 24 bzw. 41 zu der Mittelachse M der Kondensator-Anschlußklemme 10 stehen. Im einzelnen ist die winkelartige Anordnung dieser Flächen, wie auch die Anordnung der Flächen 35 und 39 des Wulstes 34 des Kondensatorbechers 25, frei wählbar. Die Einführkräfte zum Einsetzen der Kondensator-Anschlußklemme 10 in den Kondensatorbecher 25 sollten jedoch immer kleiner sein als die Kräfte zum Lösen der Verbindung.

## Patentansprüche

1. Kondensator-Anschlußklemme (10) mit einer im wesentlichen kreisförmigen Basisplatte (11), an deren einer Seite ein abstehender, zumindest teilweise umlaufender Kragen (18) zum Eingriff in einen Kondensatorbecher (25) angeordnet ist, sowie mit an der Basisplatte (11) ausgebildeten Kammern (17) zur Aufnahme elektrischer Kontakte, dadurch gekennzeichnet, daß mit dem Kragen (18) radial federnd ausgebildete Werkstoffbereiche (22) einstückig-stoffschlüssig verbunden sind, die über Betätigungsflächen (24) zur Verlagerung der Werkstoffbereiche (22) aus einer entspannten, radial äußeren Ruheposition in eine gespannte, radial innere Wirkposition verfügen, und daß an den Werkstoffbereichen (22) Rückhalteflächen (41) angeordnet sind zum Hintergreifen von entsprechenden Halteflächen (35) am Kondensatorbecher (25).

2. Kondensator-Anschlußklemme nach Anspruch 1, dadurch gekennzeichnet, daß die Werkstoffbereiche (22) am Außenumfang des Kragens (18) angeordnet sind und über den Außenumfang hinaus vorstehen.

3. Kondensator-Anschlußklemme nach Anspruch 1 oder 2, dadurch gekennzeichnet, daß die Werkstoffbereiche (22) bezüglich der Mittelachse (M) der Kondensator-Anschlußklemme (10) rotationssymmetrisch angeordnet sind.

4. Kondensator-Anschlußklemme nach einem der vorangegangenen Ansprüche, dadurch gekennzeichnet, daß die Werkstoffbereiche (22) nach Art eines Filmscharniers (19) an den Rand des Kragens (18) angeformt sind und zusammen mit dem Kragen (18) einen dazwischen liegenden, zumindest teilweise umlaufenden freien Ringraum (21) begrenzen.

5. Kondensator-Anschlußklemme nach einem der vorangegangenen Ansprüche, dadurch gekennzeichnet, daß die Werkstoffbereiche (22) integraler Bestandteil eines umlaufenden zweiten, äußeren Kragens (20) sind, dessen Außenumfangsfläche Segmente (23) aufweist, die bezüglich eines durch die Werkstoffbereiche (22) definierten äußeren Kegelumfangs zurückstehen.

6. Kondensator-Anschlußklemme nach Anspruch 5, dadurch gekennzeichnet, daß die Betätigungsfläche (24) konisch ausgebildet ist und den äußeren Kragen (20) in Einsteckrichtung (E) verjüngt.

7. Kondensator-Anschlußklemme nach Anspruch 5, dadurch gekennzeichnet, daß das in Einsteckrichtung (E) vordere Ende des Werkstoffbereichs (22) an den inneren Kragen (18) angebunden ist.

8. Kondensator-Anschlußklemme nach Anspruch 5, dadurch gekennzeichnet, daß die Segmente (23) und die Werkstoffbereiche (22) in Umfangsrichtung einander abwechselnd angeordnet sind.

9. Kondensator-Anschlußklemme nach Anspruch 8, dadurch gekennzeichnet, daß die Segmente (23) eine geringere Wandstärke als die Werkstoffbereiche (22) aufweisen.

10. Kondensator-Anschlußklemme nach einem der vorangegangenen Ansprüche, dadurch gekennzeichnet, daß im Fußbereich (38) der Außenumfangsfläche (24) der Werkstoffbereiche (22) zahnartige Rücksprünge (33) angeordnet sind, die mit einer entsprechenden Gegenverzahnung (32) am Kondensatorbecher (25) zur Verdrehsicherung zusammenwirken.

11. Kondensator-Anschlußklemme nach Anspruch 5, dadurch gekennzeichnet, daß der äußere, maximale Kreisumfang des Kopfbereiches (42) der Werkstoffbereiche (22) im wesentlichen dem Innenumfang eines in Einsteckrichtung (E) hinter der Haltefläche (35) liegenden Abschnitts (26) des Kondensatorbechers (25) entspricht.
